# EUROPEAN PATENT SPECIFICATION

(11) **EP 4 482 137 B1**
(45) Date of publication and mention of the grant of the patent: **10.06.2026**
(21) Application number: 23196195.4
(22) Date of filing: 08.09.2023
(51) Int. Cl.: H04N 9/31

(54) **METHOD AND SYSTEM FOR GENERATING A PIXEL STREAM**
VERFAHREN UND SYSTEM ZUR ERZEUGUNG EINES PIXELSTROMS
PROCÉDÉ ET SYSTÈME DE GÉNÉRATION D'UN FLUX DE PIXELS

(30) Priority: 22.06.2023 EP 23180876; 22.06.2023 EP 23180877
(43) Date of publication of application: 25.12.2024
(73) Proprietor: TriLite Technologies GmbH, 1040 Wien (AT)
(72) Inventor: MAIER, Franz Josef, 9210 Pörtschach am Wörthersee (AT); KELLER, Ben-Daniel, 2380 Perchtoldsdorf (AT); WOLKERSTORFER, Johannes, 8010 Graz (AT); DISSAUER-EBERL, Christopher, 8043 Graz (AT)
(74) Representative: Weiser Voith Gugler Patentanwälte Partnerschaft

(56) References cited:
- CN-A- 109 752 839
- GB-A- 2 457 155
- US-A1- 2014 126 590
- US-B1- 10 288 990

## Description

The present invention relates to a method of generating a pixel stream from an image comprised of pixels which each have a pixel value, wherein the pixel stream is to be fed into a projector scanning a light beam across an image area according to a given scan pattern within a time interval, the light beam being modulated in intensity according to pixel values in the pixel stream. The present invention further relates to a projection system employing said method.

Projectors which scan a mono-coloured or multi-coloured light beam across an image area are commonly used in virtual reality (VR) or augmented reality (AR) glasses, helmets or head-up displays (HUDs) for a broad range of applications like navigation, training, entertainment, education or work. Driven by a light source driver, a light source emits the light beam onto a scanner, while the light source driver modulates the light beam in intensity according to pixel values, for example RGB values, of the pixels of an image. The scanner, e.g., a mirror assembly having one or more moving micro-electromechanical-system (MEMS) mirrors, deflects the light beam into subsequent directions (angles) according to a scan pattern towards the image area, e.g., a wall, a board, a projection screen, a poster, the retina of an eye, an augmented reality (AR) combiner waveguide, another combiner optics, or the like, one or more directions (angles) per pixel of the image to display the same on the image area.

In raster scanning the scanner scans the light beam across the image area row by row and line by line according to a raster scan pattern. In so-called Lissajous scanning, e.g., described in CN 109752839 A and GB 2 457 155 A, the scanner scans the light beam across the image area according to a "dense" Lissajous pattern which allows for higher speeds of the light beams along the Lissajous pattern and hence higher frame rates, e.g., by exploiting resonances of the MEMS mirror.

With Lissajous scanning, higher speeds of the light beam along the Lissajous pattern and hence higher frame rates can be achieved with low driving powers and small actuators because of exploiting the resonance of the MEMS mirror. However, current Lissajous scanners suffer from a complex and slow synchronisation of the light source driver with the mirror assembly movement via a frame buffer that stores the image and feeds the light source driver with pixels. To synchronise the pixel feeding with the MEMS mirror position, the mirror driver periodically provides a synchronisation signal indicating the current mirror position within the Lissajous pattern to the frame buffer. The frame buffer identifies the currently needed pixel in the image for the indicated mirror position, retrieves its pixel value from the frame buffer and feeds the same to the light source driver. While this setup ensures that each pixel value provided to the light source driver matches the current MEMS mirror position, the buffer requires a high processing power for identifying the currently needed pixel and accessing the memory locations in the buffer that are scattered according to the Lissajous pattern.

To overcome these problems of real-time synchronised frame buffers, the pixel values may be predetermined by a central processing unit (CPU) in that order in which they are to be displayed according to the scan pattern and then be fed to the light source driver (optionally via an intermediate buffer) in that order in a pixel stream. In this way, an approximate synchronisation of the light source driver and the CPU suffices to display the correct pixel values at the respective time. Current methods and systems to generate such pixel streams, however, involve massive numbers of memory accesses, require fast memory and cause high CPU loads, in particular for high resolution images and high frame rates. Moreover, an adaption of the pixel values on-the-fly, e.g., to account for changed ambient lighting, is nearly infeasible to implement.

It is an object of the present invention to provide a method and a projection system which allow for a fast generation of a pixel stream and, thus, for displaying an image with a high resolution and/or at a high frame rate.

In a first aspect of the invention this object is achieved with a method of generating a pixel stream from an image comprised of pixels which each have a pixel value, wherein the pixel stream is to be fed into a projector scanning a light beam across an image area according to a given scan pattern within a time interval, the light beam being modulated in intensity according to pixel values in the pixel stream, comprising:
storing the image in a memory;
determining, for each of successive sub-intervals which together form the time interval, that pixel that is to be displayed by the light beam within said sub-interval according to the scan pattern;
identifying successive sequences of one or more successive sub-intervals for which the same pixel has been determined; and
for each of the successive sequences of one or more successive sub-intervals for which the same pixel has been determined: retrieving the pixel value of said pixel from the memory once and appending the retrieved pixel value N times to the pixel stream, N being the number of sub-intervals in said sequence and at least one sequence having an N > 1.

The inventive method utilises the fact that most scanners scan the light beam over the image area with a non-uniform speed of the light beam along the scan pattern and/or most scan patterns have non-uniform path lengths of the light beam in different pixels, each resulting in a non-uniform duration of stay of the light beam within different pixels. As a consequence, at least some pixels, e.g., at the boundary of the image where the speed of the light beam is low for many scanners, are typically to be displayed for a number N > 1 of successive sub-intervals of an (image display) time interval.

According to the inventive method the respective to-be displayed-pixel of each sub-interval is determined, sequences of same pixel sub-intervals are identified and for each sequence, in particular for those sequences having more than one sub-interval, the pixel value of the respective same pixel is retrieved by only one single memory access for appending the pixel value of that same pixel N times to the pixel stream. Hence, sequences of same pixels are forecast and employed to reduce the required memory accesses by a factor N for each sequence.

As the number of load expensive memory accesses is reduced, a fast generation of the pixel stream is enabled. With the fast generation of the pixel stream, more pixel values can be fed to the projector per time interval such that images can be displayed at a higher resolution and/or at a higher frame rate. In addition, reduced memory accesses reduce the load on a CPU carrying out the method, which frees additional CPU resources and allows for an adaption of the pixel values on-the-fly, e.g., to account for changed ambient lighting.

In some embodiments the to-be-displayed pixel of each sub-interval may be determined based on an on-the-fly calculation of the scan pattern. For a particularly fast determination, however, in a preferred embodiment the scan pattern is stored in the form of a look-up table of memory addresses of the pixels to be successively displayed, and said determining and retrieving includes accessing the look-up table. In this way the pixel of each sub-interval is quickly determined by its memory address and the pixel value of each sequence quickly retrieved, simply by accessing the look-up table to obtain the memory addresses of the pixels and then the memory to retrieve the pixel values according to the memory addresses.

The memory addresses may be stored in the look-up table in any format, as long as they provide an indication of the pixels to be displayed in the correct play-out order. The invention provides for two beneficial variants of a look-up table.

In the first beneficial variant the look-up table is a succession of memory addresses, one memory address for each sub-interval, and the sequences are identified by detecting successively equal memory addresses in the succession. With this look-up table format the sequences can be efficiently detected as successively equal memory addresses and said number N be easily identified by counting the number of successively equal memory addresses of each detected sequence.

In the second beneficial variant the look-up table includes one memory address for each sequence and the respective number N of sub-intervals of that sequence. This look-up table format provides the memory addresses in a compact run-length encoded form, with only one memory address per sequence and its run-length (number) N. Hence, this format is memory efficient, especially for larger run-lengths N. As each sequence is indicated by a new entry in the look-up table, a particularly fast identification of the sequences is achieved. Due to the direct provision of the run-lengths N, the same need not be calculated but simply read-out so that this embodiment is particularly load-efficient.

The scan pattern may be a raster scan pattern or a non-raster scan pattern, e.g., a spiral pattern. In a favourable embodiment the scan pattern is a Lissajous pattern, which allows to exploit resonances of the mirrors of the mirror assembly and, hence, to achieve higher speeds of the light beam and higher frame rates.

In a second aspect the present invention provides for a projection system for displaying an image comprised of pixels which each have a pixel value, comprising:
a projector with a light source configured to emit a light beam, a light source driver configured to modulate the light beam in intensity according to the pixel values fed to the projector in a pixel stream, and a scanner configured to scan the light beam across an image area according to a given scan pattern within a time interval; and
a central processing unit, CPU, configured to
store the image in a memory,
determine, for each of successive sub-intervals which together form the time interval, that pixel that is to be displayed by the light beam within said sub-interval according to the scan pattern,
identify successive sequences of one or more successive sub-intervals for which the same pixel has been determined,
for each of the successive sequences of one or more successive sub-intervals for which the same pixel has been determined: retrieve the pixel value of said pixel from the memory once and append the retrieved pixel value N times to the pixel stream, N being the number of sub-intervals in said sequence and at least one sequence having an N > 1, and
feed the pixel stream towards the projector for displaying.

The projection system utilises the pixel stream generated by the CPU according to the inventive method in order to display an image. To this end the projection system may utilise any of the above-mentioned embodiments to achieve the above-mentioned advantages.

In a preferred embodiment the projection system further comprises a buffer interposed between the CPU and the projector to buffer the pixel stream and feed the same to the light source driver. In a particularly preferred variant of this embodiment the buffer is configured to feed the pixel stream in synchronism with the scanner to the projector for displaying. Such a synchronism may be achieved, e.g., by sending synchronisation or trigger signals from the scanner to the buffer, in order to couple the transmission of the pixel stream to the scanner movement.

The invention will now be described by means of exemplary embodiments thereof with reference to the enclosed drawings, in which show:
Fig. 1 a projection system according to the invention, displaying pixel values of pixels of an image on an image area, in a perspective view;
Fig. 2 a central processing unit, a buffer, and a projector with a light source, a light source driver and a scanner of the projection system of Fig. 1 in a schematic circuit diagram;
Fig. 3 a method of generating a pixel stream from an image according to the present invention as performed by the projection system of Fig. 1 in a flow chart;
Fig. 4 an exemplary determination of pixels, retrieval of pixel values from the image and appending of the retrieved pixel values to a pixel stream according to the method of Fig. 3 in a schematic diagram;
Fig. 5 an exemplary determination of pixels and retrieval of pixel values by means of a first embodiment of a look-up table as performed by the central processing unit of Fig. 2 in a schematic diagram; and
Fig. 6 a further exemplary determination of pixels and retrieval of pixel values by means of a second embodiment of a look-up table as performed by the central processing unit of Fig. 2 in a schematic diagram.

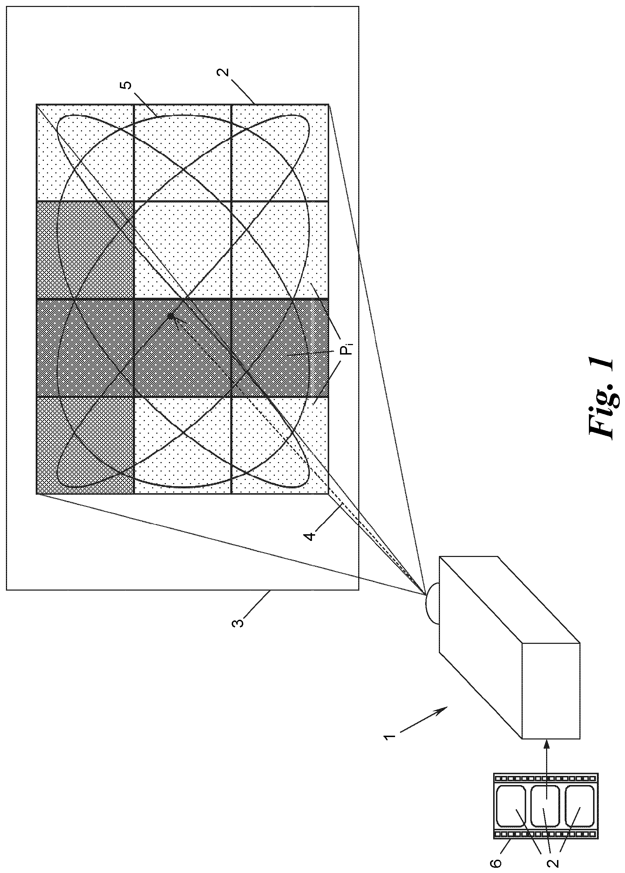

Fig. 1 shows a projection system 1 displaying an image 2 comprised of pixels Pᵢ onto a wall 3 by scanning the wall 3 with a pulsed or continuous, mono- or multi-coloured light beam 4 according to a scan pattern 5 (here: a Lissajous pattern) to draw, one after the other, pixel values Vⱼ (here: shown in grey scales) of the pixels Pᵢ of the image 2. The image 2 may have any form, e.g., rectangular, circular, etc., any pixel resolution, e.g., according to a conventional image or video standard such as full HD (1920 x 1080 pixels), UHD (3840 x 2160 pixels), 4K (4096 x 2160 pixels) etc., and the Lissajous pattern 5 may densely cover the pixels Pᵢ; however, for illustrational purposes a rectangular image 2 with only a few pixels Pᵢ and a simple, coarse Lissajous pattern 5 are shown in Fig. 1.

The image 2 is displayed for at least one time interval TI of successive time intervals and may be part of a movie 6 or be a single image, e.g., a photo to be displayed for a longer period of time. Instead of a wall 3, the projection system 1 could display the light beam 4 onto any kind of image area, such as a board, projection screen, poster, the retina of an eye, an augmented reality (AR) combiner waveguide, another combiner optics, or the like. Accordingly, the projection system 1 may be part of a videobeamer, AR or VR (virtual reality) glasses, a helmet, a head-up display, etc.

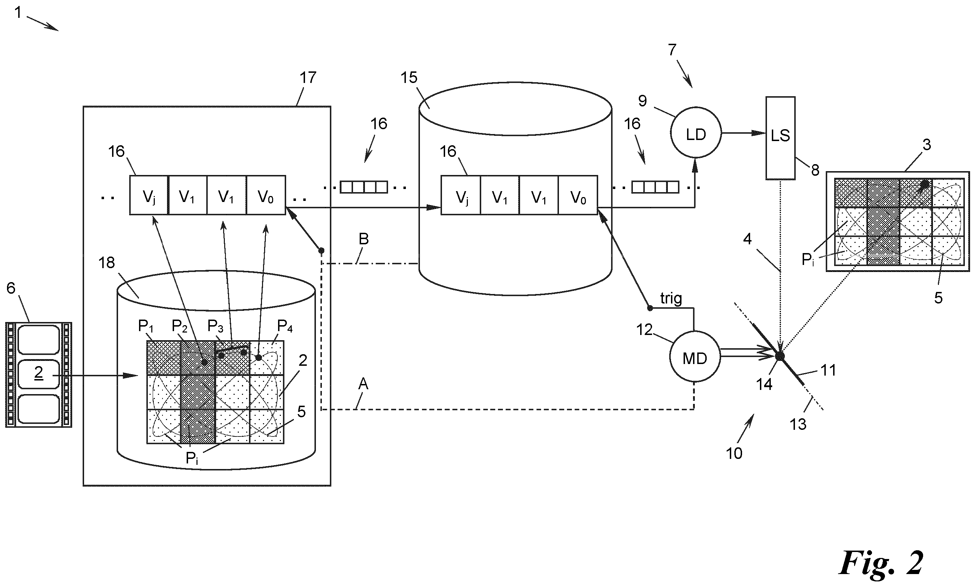

With reference to Figs. 1 and 2, the projection system 1 has a projector 7 with a light source 8, a light source driver 9 and a scanner 10. The light source 8 emits the light beam 4 onto the scanner 10. To this end, the light source 8 may be any light source known in the art, e.g., an incandescent lamp, a gas, liquid or solid laser, a laser diode, an LED, etc.

The scanner 10 scans the light beam 4 across the wall 3 according to said scan pattern 5. The scanner 10 may be any scanner known in the art, e.g., comprising one or more movable deflectors or reflectors such as a scanning mirror, a scanning prism, a liquid lens, etc. In the embodiment shown, the scanner 10 is a mirror assembly which has one or more, here: one, micro-electro-mechanical-system, MEMS, mirror 11 deflecting the emitted light beam 4 towards the wall 3.

The MEMS mirror 11 is driven by a mirror driver 12 of the scanner 10 to oscillate about a horizontal axis 13 with a horizontal oscillation period Tₕ and about a vertical axis 14 with a vertical oscillation period Tᵥ, in order to deflect the emitted light beam 4 towards the wall 3 according to the Lissajous pattern 5. As the oscillation of the MEMS mirror 11, i.e. the movement of the scanner 10, determines the deflection pattern, i.e. the Lissajous pattern 5, both the oscillation and the deflection are carried out according to one and the same Lissajous pattern 5. Instead of a Lissajous pattern 5 any other scan pattern, e.g., a raster pattern or another non-raster pattern, may be used.

Depending on the Lissajous pattern 5 to be displayed, Tₕ and Tᵥ may be chosen such that the trajectory of the light beam 4 on the wall 3 densely covers the entire image 2 during a period of one image frame. Such a "complex" or "dense" Lissajous pattern 5 can be achieved when the frequencies fₕ = 1/Tₕ, fᵥ = 1/Tᵥ are greater than the frame rate f_{fr} = 1/T_{fr}, e.g., greater than 1 kHz or tens of kHz, and the beginnings of their respective oscillation periods meet, e.g., only over every one or more image frames, in particular when the frequencies fₕ, fᵥ are close to each other. To this end, integer frequencies fₕ, fᵥ with a small greatest common divisor, e.g., smaller than 10, may be employed.

The light source 8 is driven by the light source driver 9 which modulates the light beam 4 in intensity according to pixel values Vⱼ fed into the light source driver 9 to display the pixel values Vⱼ. In case the light source 8 displays a mono-colour, black and white, or grey scale image 2 with a mono-coloured light beam 4, each pixel Pᵢ comprises a single component pixel value Vⱼ, e.g., a brightness or intensity value, and in case the light source 8 displays a multi-colour image 2 with a multi-coloured light beam 4, each pixel comprises a multi component pixel value Vⱼ, e.g., an RGB value indicating the brightness or intensity of a red, green, and blue colour, an YPbPr value, etc. To display the pixel values Vⱼ, the light source driver 9 may alter the power, the pulse width and/or the pulse rate of the light beam 4 (in case of a multi-coloured light beam 4: of respective partial light beams of different colours forming the multi-coloured light beam 4).

To synchronise the light source driver 9 and the mirror driver 12 the projection system 1 optionally has a buffer 15 which is connected to the light source driver 9 and the mirror driver 12. The buffer 15 buffers the pixel values Vⱼ in form of a pixel stream 16 which includes the pixel values Vⱼ of the pixels Pᵢ of the image 2 in the correct order, i.e. in that order in which they are to be displayed. The buffer 15, e.g., by means of an internal buffer controller, feeds - synchronised by the mirror driver 12 - the buffered pixel values Vⱼ to the light source driver 9.

In one embodiment the buffer 15 feeds the buffered pixel values Vⱼ of the pixel stream 16 each time a synchronisation or trigger signal "trig" is received. In another embodiment the buffer 15 feeds the pixel values Vⱼ successively according to an internal clock of the buffer 15, which internal clock may optionally be re-synchronised with the frequencies fₕ, fᵥ of the mirror driver 12 each time it receives the trigger signal trig.

To supply the buffer 15 with the pixel values Vⱼ in said correct order the projection system 1 has a central processing unit (CPU) 17. The CPU 17 transforms the image 2, whose pixels Pᵢ and pixel values Vⱼ are not ordered according to the Lissajous pattern 5, to the pixel stream 16 whose pixel values Vⱼ are ordered according to the Lissajous pattern 5. The CPU 17 then transfers the pixel stream 16 (at once or in parts) to the buffer 15 for buffering. The CPU 17 stores the image 2 in a memory 18 which may be part of the CPU 17 or external therefrom. To carry out these tasks, the CPU 17 may be any central or main processor and may optionally comprise dedicated coprocessors such as a graphics processing unit (GPU) or the like.

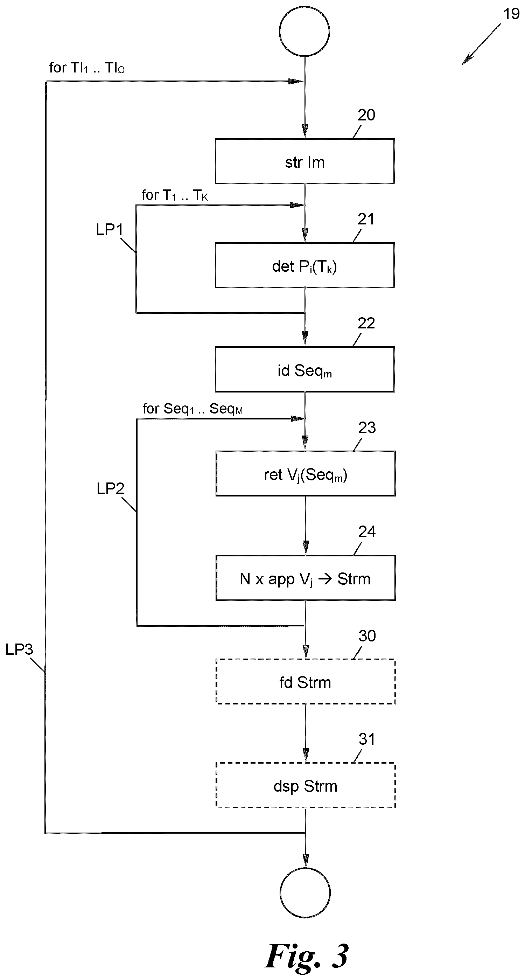

With reference to Figs. 3 to 6, a method 19 for generating the pixel stream 16 will now be explained. The method 19 may be carried out by the CPU 17 and comprises the following steps 20 - 24:
In a first step 20 of the method 19 the image 2 is stored in the memory 18.

Then, the pixels Pᵢ to be successively displayed are determined in the correct play-out order. To this end, for each sub-interval T₁, T₂, ..., T_{K}, generally Tₖ, which together form said time interval TI, a second step 21 of determining the respective pixel Pᵢ for that sub-interval Tₖ, i.e. that pixel Pᵢ that is to be displayed by the light beam 4 within said sub-interval Tₖ, is carried out in a loop LP1.

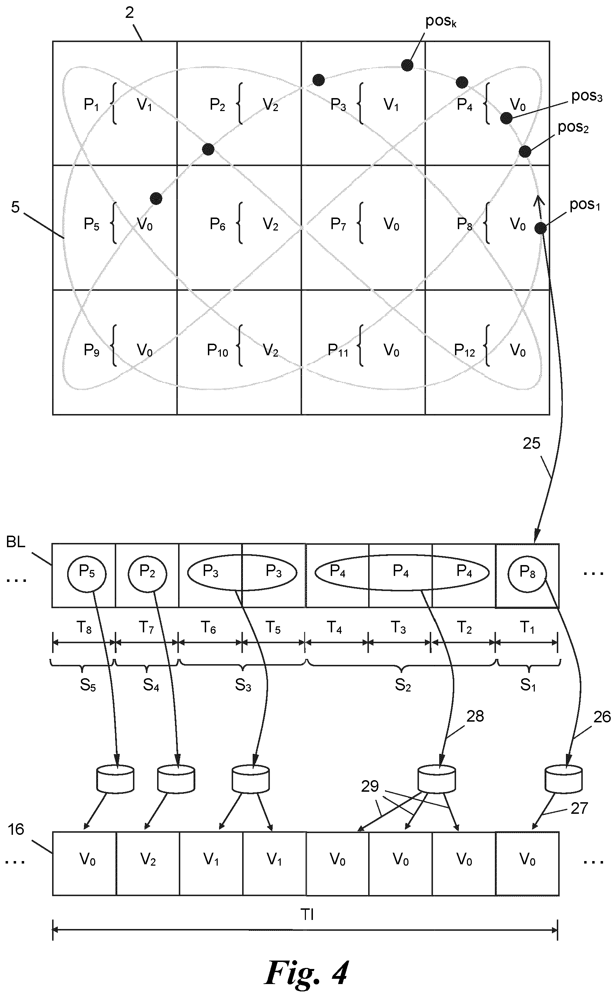

In the example of Fig. 4 in the first sub-interval T₁ the light beam 4 traverses a respective first position pos₁ within the Lissajous pattern 5. According to this position pos₁ within the Lissajous pattern 5 the light beam 4 is to display pixel P₈ within the first sub-interval T₁. Hence, pixel P₈ is determined for the first sub-interval T₁, see arrow of correspondence 25. Accordingly, following the Lissajous pattern 5, in the subsequent sub-intervals T₂, T₃, ..., Tₖ the light beam 4 traverses respective further positions pos₂, pos₃, ..., posₖ at which the pixels P₄, P₄, P₄, P₃, P₃, P₂ and P₅ are to be successively displayed and, hence, determined in the steps 21, see the exemplary block BL of determined pixels Pᵢ.

It is noted that due to non-uniform velocity of scanning and non-uniform lengths of the Lissajous pattern 5 within different pixels Pᵢ the positions posₖ will typically be distributed non-uniformly across the image 2 such that different regions (pixels Pᵢ) of the image 2 will have different densities of positions posₖ. Hence, the number of positions posₖ and sub-intervals Tₖ per pixel Pᵢ will vary across the image 2 as shown in Fig. 4.

It is further noted that step 21 does not require the retrieval of any pixel value Vⱼ yet but is only based on the location of the pixels Pᵢ within the image 2, the scan pattern 5 and the timing provided by the respective sub-interval Tₖ.

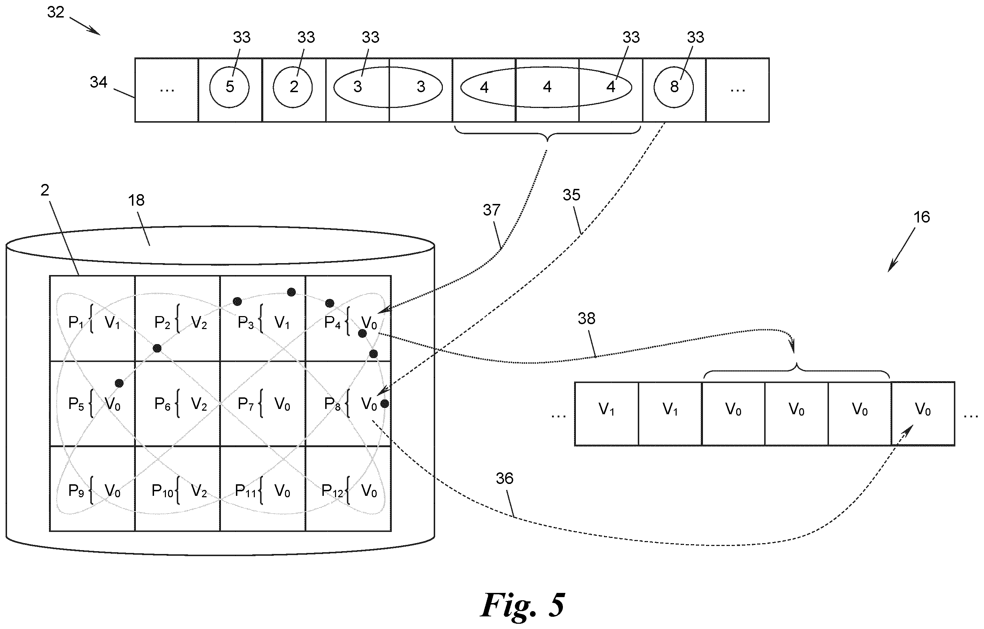

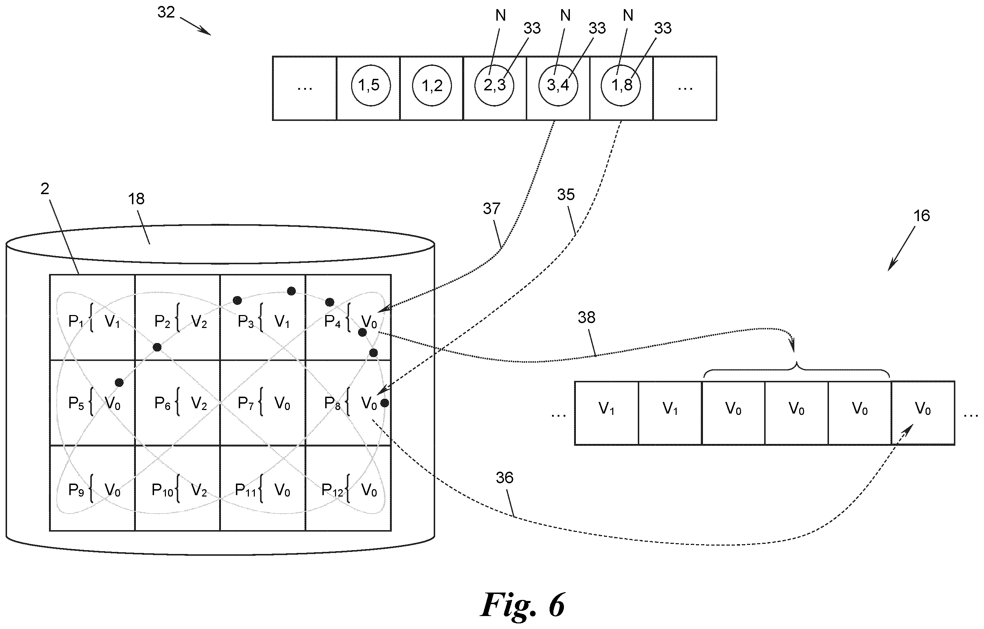

The scan pattern 5 on the image 2 and the pixels Pᵢ to be displayed according to the scan pattern 5 may be calculated in step 21, e.g., starting from an initial orientation of the scanner 10 provided to the CPU 17 by the scanner 10. Alternatively, the scan pattern 5 on the image 2 and the pixel Pᵢ (or its memory address) may be provided in the form of a look-up table and determined therefrom as explained below with reference to Figs. 5 and 6.

In another step 22 successive sequences S₁, S₂, ..., S_{M}, generally Sₘ, of successive sub-intervals Tₖ for which the same pixel Pᵢ has been determined in steps 21 of the loop LP1 are identified. Fig. 4 illustrates an exemplary identification of five sequences S₁ - S₅ (the corresponding pixels Pᵢ are enclosed by a respective ellipse or circle), for instance a first sequence S₁ of only one sub-interval T₁ for which pixel P₈ has been determined, a second sequence S₂ of three sub-intervals T₂ - T₄ for which pixel P₄ has been determined, etc. Thus, same-pixel-sequences Sₘ are "forecast" in step 22.

For each of the identified sequences Sₘ subsequent steps 23 and 24 are carried out in a second loop LP2 to add the pixel values Vⱼ to the pixel stream 16 in the correct order. In step 23 of the loop LP2 the respective pixel value Vⱼ of the sequence Sₘ, i.e. of that pixel Pᵢ which has been determined for the sub-intervals Tₖ of that sequence Sₘ in step 21, is retrieved from the memory 18. In step 24 of the loop LP2, the retrieved pixel value Vⱼ is appended to the pixel stream 16 as often as it is to be displayed within the sequence Sₘ, i.e. N times, which number N corresponds to the number of sub-intervals Tₖ in that sequence Sₘ.

For instance, in the example of Fig. 4, the first sequence S₁ has one single sub-interval T₁ for which pixel P₈ has been determined in step 21, i.e. N = 1 for sequence S₁. Thus, for the first sequence S₁, the pixel value V₀ of pixel P₈ is retrieved once from the memory 18 in step 23 (see arrow 26) and appended once in step 24 (see arrow 27) in the first run of the loop LP2. Similarly, the second sequence S₂ has three sub-intervals T₂ - T₄ for which pixel P₄ has been determined in step 21, i.e. N = 3 for sequence S₂. Hence, for the second sequence S₂, the pixel value V₀ of pixel P₄ is retrieved once from the memory 18 in step 23 (see arrow 28) and appended three times to the pixel stream 16 in step 24 (see arrows 29) in the second run of the loop LP2. Thus, to append three pixel values Vⱼ only one memory access is required, a factor N less compared to a pixel stream generation without a forecast of same-pixel-sequences Sₘ. This retrieving and appending is continued for the subsequent sequences S₃, S₄, ... in the further runs of the loop LP2 to prolong the pixel stream 16.

It shall be noted that the pixel stream 16 may initially be generated when the first pixel value Vⱼ is appended.

Steps 23 and 24 may be carried out in an alternating manner, i.e. for each sequence Sₘ the pixel value Vⱼ may be retrieved in step 23 and immediately appended in step 24, or in a successive manner, i.e. for all sequences Sₘ of the time interval TI first the pixel values Vⱼ may be retrieved by carrying out step 23 for all sequences Sₘ and then all of the retrieved pixel values Vⱼ may be appended by carrying out step 24 for all sequences Sₘ.

Optionally - in an "online" or "on-the-fly" embodiment - the generated pixel stream 16 is fed towards the light source driver 12 in a step 30 either directly (in embodiments without the buffer 15) or via the buffer 15. In a further optional step 31 of the method 19 the pixel stream 16, i.e. the pixel values Vⱼ included therein, may be displayed by the projector 7.

As shown in Fig. 3, to prolong the pixel stream 16 for further images 2, the steps of storing (step 20), determining (step 21), identifying (step 22), retrieving (step 23) and appending (step 24) may be repeated in a loop LP3 for one or more further time intervals TI, optionally with the steps of feeding (step 30) and displaying (step 31) to display the prolonged pixel stream 16.

The CPU 17 may feed (optionally: parts of) the pixel stream 16 when it is triggered by the mirror driver 9 as indicated by the dashed line A in Fig. 2, or when the buffer 15 indicates a low filling level as indicated by the chain-dotted line B in Fig. 2, or each time a predetermined time interval has lapsed, e.g., every n-th cycle of the clock of the CPU 17, or the like.

The determining of the pixels Pᵢ, the identification of the sequences Sₘ, and the retrieving of the pixel values Vⱼ in steps 21 - 23 may be carried out in many ways. In one embodiment (two variants of which are shown in Figs. 5 and 6), a look-up table 32 of memory addresses 33 of the pixels Pᵢ to be successively displayed is employed. The look-up table 32 encodes the Lissajous pattern 5 by means of the successive memory addresses 33 such that the pixels Pᵢ can be determined and retrieved by the memory addresses 33. With reference to Figs. 5 and 6, two variants of a look-up table 32 which store the Lissajous pattern 5 of Fig. 4 shall now be described.

In the first look-up table variant shown in Fig. 5, the look-up table 32 is a succession 34 of memory addresses 33 of the pixels Pᵢ, wherein one memory address 33 is stored for each sub-interval Tₖ, here: the memory address '8' (of pixel P₈) for the first sub-interval T₁, the memory address '4' (of pixel P₄) for the second sub-interval T₂, etc. in the order that the corresponding pixels Pᵢ are to be displayed according to the Lissajous pattern 5. In this embodiment the pixel Pᵢ of each sub-interval Tₖ is determined in step 21 by its memory address 33 in the look-up table 33, e.g., pixel P₈ is determined as '8'. The sequences Sₘ are identified in step 22 by detecting successively equal memory addresses 33 (depicted as enclosed circles and ellipses) in the succession 34, e.g., sequence S₂ is identified by three successively equal memory addresses '4'. The number N may be identified by counting the successively equal memory addresses 33 in the succession 34. For each sequence Sₘ the memory 18 is accessed once to retrieve the respective pixel value Vⱼ and the pixel value Vⱼ is appended N times as described above and illustrated in Fig. 5, e.g., by arrows 35 and 36 (for sequence S₁) and arrows 37 and 38 (for sequence S₂).

In the second look-up table variant shown in Fig. 6, the look-up table 32 is stored in a run-length encoded form and includes, for each sequence Sₘ (the sequence-correspondence denoted by circles), one memory address 33, i.e. the memory address 33 of the same pixel Pᵢ for that sequence Sₘ, and the respective number (run-length) N of sub-intervals Tₖ of that sequence Sₘ indicating how long that sequence Sₘ is to be displayed according to the Lissajous pattern 5. In the example of Fig. 6, the look-up table 32 includes the memory address '8' and number N = '1' for the first sequence S₁, the memory address '4' and number N = '3' for the second sequence S₂, etc. to encode the Lissajous pattern 5 shown in Fig. 4.

In this look-up table variant each sequence Sₘ is identified and the respective pixel Pᵢ determined in steps 21 and 22 from a respective one of successive entries of the look-up table 32. For instance, in Fig. 6 the first pixel Pᵢ of the first sequence S₁ is determined by its memory address '8' and the first sequence S₁ is identified as the first entry with a run-length of one sub-interval '1', the second pixel Pᵢ of the second sequence S₂ is determined by its memory address '4' and the second sequence S₂ is identified as the second entry with a run-length of three sub-intervals '3', and so on and so forth. Again, for each sequence Sₘ, the memory 18 is accessed once to retrieve the respective pixel value Vⱼ in step 23 and the retrieved pixel value Vⱼ is appended N times (N here being read-out from the look-up table 32) as described above and illustrated in Fig. 6, e .g. by arrows 40 and 41 (for sequence S₁) and arrows 42 and 43 (for sequence S₂).

It is noted that the projector 7 may employ a multi-coloured light beam with partial light beams that are mutually offset, e.g. angular and/or transversal. In this case any partial light beam may be seen as "the light beam" in the meaning of the present disclosure, i.e. the method described herein may be applied separately for each of said partial light beams with a respective scan pattern 5 and generated pixel stream 16.

It is further noted that the method 19 described herein may be carried out on-the-fly, i.e., the generated pixel stream 16 (or parts thereof) may be immediately fed into the projector 7, or offline, i.e., the generated pixel stream 16 may be stored for a feeding later on.

Moreover, the steps 20 - 24, 30 and 31 of the method 19 may be carried out in any order (some even simultaneously or in parallel), so far as one step does not depend on the result of another step. For example, in a look-up table embodiment the identification of the sequences Sₘ (step 22) and the determination of the respective pixel Pᵢ (step 21) based on the entries in the look-up table 32 may be carried out simultaneously.

The invention is not restricted to the specific embodiments described above but encompasses all variants, modifications and combinations thereof that fall within the scope of the appended claims.

## Claims

1. A method of generating a pixel stream (16) from an image (2) comprised of pixels (Pᵢ) which each have a pixel value (Vⱼ), wherein the pixel stream (16) is to be fed into a projector (7) scanning a light beam (4) across an image area (3) according to a given scan pattern (5) within a time interval (TI), the light beam (4) being modulated in intensity according to pixel values (Vⱼ) in the pixel stream (16), comprising:
storing (20) the image (2) in a memory (18);
determining (21), for each of successive sub-intervals (Tₖ) which together form the time interval (TI), that pixel (Pᵢ) that is to be displayed by the light beam (4) within said sub-interval (Tₖ) according to the scan pattern (5);
**characterised in that** the method (19) further comprises:
identifying (22) successive sequences (Sₘ) of one or more successive sub-intervals (Tₖ) for which the same pixel (Pᵢ) has been determined; and
for each of the successive sequences (Sₘ) of one or more successive sub-intervals (Tₖ) for which the same pixel (Pᵢ) has been determined: retrieving (23) the pixel value (Vⱼ) of said pixel (Pᵢ) from the memory (18) once and appending (24) the retrieved pixel value (Vⱼ) N times to the pixel stream (16), N being the number of sub-intervals (Tₖ) in said sequence (Sₘ) and at least one sequence (Sₘ) having an N > 1.

2. The method according to claim 1, wherein the scan pattern (5) is stored in the form of a look-up table (32) of memory addresses (33) of the pixels (Pᵢ) to be successively displayed, and wherein said determining (21) and retrieving (23) includes accessing the look-up table (32).

3. The method according to claim 2, wherein the look-up table (32) is a succession (34) of memory addresses (33), one memory address (33) for each sub-interval (Tₖ), and wherein the sequences (Sₘ) are identified by detecting successively equal memory addresses (33) in the succession (34).

4. The method according to claim 2, wherein the look-up table (32) includes one memory address (33) for each sequence (Sₘ) and the respective number N of sub-intervals (Tₖ) of that sequence (Sₘ).

5. The method according to any one of claims 1 to 4, wherein said scan pattern is a Lissajous pattern (5).

6. A projection system for displaying an image (2) comprised of pixels (Pᵢ) which each have a pixel value (Vⱼ), comprising:
a projector (7) with a light source (8) configured to emit a light beam (4), a light source driver (9) configured to modulate the light beam (4) in intensity according to the pixel values (Vⱼ) fed to the projector (7) in a pixel stream (16), and a scanner (10) configured to scan the light beam (4) across an image area (3) according to a given scan pattern (5) within a time interval (TI); and
a central processing unit, CPU, (17) configured to
store (20) the image (2) in a memory (18), and
determine (21), for each of successive sub-intervals (Tₖ) which together form the time interval (TI), that pixel (Pᵢ) that is to be displayed by the light beam (4) within said sub-interval (Tₖ) according to the scan pattern (5),
**characterised in that** the CPU (17) is further configured to
identify (22) successive sequences (Sₘ) of one or more successive sub-intervals (Tₖ) for which the same pixel (Pᵢ) has been determined,
for each of the successive sequences (Sₘ) of one or more successive sub-intervals (Tₖ) for which the same pixel (Pᵢ) has been determined: retrieve (23) the pixel value (Vⱼ) of said pixel (Pᵢ) from the memory (18) once and append (24) the retrieved pixel value (Vⱼ) N times to the pixel stream (16), N being the number of sub-intervals (Tₖ) in said sequence (Sₘ) and at least one sequence (Sₘ) having an N > 1, and
feed (30) the pixel stream (16) towards the projector (7) for displaying.

7. The projection system according to claim 6, wherein the CPU (17) is configured to store the scan pattern (5) in the form of a look-up table (32) of memory addresses (33) of the pixels (Pᵢ) to be successively displayed, and to determine the pixels (Pᵢ) and retrieve the pixel values (Vⱼ) by accessing the look-up table (32).

8. The projection system according to claim 7, wherein the look-up table (32) is a succession (34) of memory addresses (33), one memory address (33) for each sub-interval (Tₖ), and wherein the CPU (17) is configured to identify (22) the sequences (Sₘ) by detecting successively equal memory addresses (33) in the succession (34).

9. The projection system according to claim 7, wherein the look-up table (32) includes one memory address (33) for each sequence (Sₘ) and the respective number N of sub-intervals (Tₖ) of that sequence (Sₘ).

10. The projection system according to any one of claims 6 to 9, wherein said scan pattern is a Lissajous pattern (5).

11. The projection system according to any one of claims 6 to 10, further comprising a buffer (15) interposed between the CPU (17) and the projector (7).

12. The projection system according to claim 11, wherein the buffer (15) is configured to feed the pixel stream (16) in synchronism with the scanner (10) to the projector (7) for displaying.

## Patentansprüche

1. Verfahren zum Erzeugen eines Pixelstroms (16) aus einem Bild (2), welches aus Pixeln (Pᵢ) gebildet ist, die jeweils einen Pixelwert (Vⱼ) aufweisen, wobei der Pixelstrom (16) einem Projektor (7) zugeführt werden soll, der einen Lichtstrahl (4) über einen Bildbereich (3) gemäß einem vorgegebenen Scanmuster (5) innerhalb eines Zeitintervalls (TI) scannt, wobei der Lichtstrahl (4) in Intensität gemäß Pixelwerten (Vⱼ) im Pixelstrom (16) moduliert wird, umfassend:
Speichern (20) des Bildes (2) in einem Speicher (18);
Ermitteln (21), für jedes von aufeinanderfolgenden Teilintervallen (Tₖ), die gemeinsam das Zeitintervall (TI) bilden, desjenigen Pixels (Pᵢ), das durch den Lichtstrahl (4) innerhalb des genannten Teilintervalls (Tₖ) gemäß dem Scanmuster (5) angezeigt werden soll;
**dadurch gekennzeichnet, dass** das Verfahren (19) ferner umfasst:
Identifizieren (22) aufeinanderfolgender Sequenzen (Sₘ) von einem oder mehreren aufeinanderfolgenden Teilintervallen (Tₖ), für welche dasselbe Pixel (Pᵢ) ermittelt wurde; und
für jede der aufeinanderfolgenden Sequenzen (Sₘ) von einem oder mehreren aufeinanderfolgenden Teilintervallen (Tₖ), für welche dasselbe Pixel (Pᵢ) ermittelt wurde: einmaliges Abrufen (23) des Pixelwerts (Vⱼ) des genannten Pixels (Pᵢ) aus dem Speicher (18) und N-maliges Anhängen (24) des abgerufenen Pixelwerts (Vⱼ) an den Pixelstrom (16), wobei N die Anzahl von Teilintervallen (Tₖ) in der genannten Sequenz (Sₘ) ist und zumindest eine Sequenz (Sₘ) ein N > 1 hat.

2. Verfahren nach Anspruch 1, wobei das Scanmuster (5) in Form einer Lookup-Tabelle (32) von Speicheradressen (33) der aufeinanderfolgend anzuzeigenden Pixel (Pᵢ) gespeichert wird, und wobei das genannte Ermitteln (21) und Abrufen (23) das Zugreifen auf die Lookup-Tabelle (32) beinhaltet.

3. Verfahren nach Anspruch 2, wobei die Lookup-Tabelle (32) eine Folge (34) von Speicheradressen (33), eine Speicheradresse (33) für jedes Teilintervall (Tₖ), ist, und wobei die Sequenzen (Sₘ) durch Detektieren aufeinanderfolgender gleicher Speicheradressen (33) in der Folge (34) identifiziert werden.

4. Verfahren nach Anspruch 2, wobei die Lookup-Tabelle (32) eine Speicheradresse (33) für jede Sequenz (Sₘ) und die jeweilige Anzahl N von Teilintervallen (Tₖ) dieser Sequenz (Sₘ) beinhaltet.

5. Verfahren nach einem der Ansprüche 1 bis 4, wobei das genannte Scanmuster ein Lissajous-Muster (5) ist.

6. Projektionssystem zum Anzeigen eines Bildes (2), welches aus Pixeln (Pᵢ) gebildet ist, die jeweils einen Pixelwert (Vⱼ) aufweisen, umfassend:
einen Projektor (7) mit einer Lichtquelle (8), die dazu ausgebildet ist, einen Lichtstrahl (4) auszusenden, einem Lichtquellentreiber (9), der dazu ausgebildet ist, den Lichtstrahl (4) in Intensität gemäß den dem Projektor (7) in einem Pixelstrom (16) zugeführten Pixelwerten (Vⱼ) zu modulieren, und einem Scanner (10), der dazu ausgebildet ist, den Lichtstrahl (4) über einen Bildbereich (3) gemäß einem vorgegebenen Scanmuster (5) innerhalb eines Zeitintervalls (TI) zu scannen; und
eine zentrale Verarbeitungseinheit, CPU, (17), die dazu ausgebildet ist,
das Bild (2) in einem Speicher (18) zu speichern (20), und
für jedes von aufeinanderfolgenden Teilintervallen (Tₖ), die gemeinsam das Zeitintervall (TI) bilden, dasjenige Pixel (Pᵢ) zu ermitteln (21), das durch den Lichtstrahl (4) innerhalb des genannten Teilintervalls (Tₖ) gemäß dem Scanmuster (5) angezeigt werden soll,
**dadurch gekennzeichnet, dass** die CPU (17) ferner dazu ausgebildet ist,
aufeinanderfolgende Sequenzen (Sₘ) von einem oder mehreren aufeinanderfolgenden Teilintervallen (Tₖ), für welche dasselbe Pixel (Pᵢ) ermittelt wurde, zu identifizieren (22),
für jede der aufeinanderfolgenden Sequenzen (Sₘ) von einem oder mehreren aufeinanderfolgenden Teilintervallen (Tₖ), für welche dasselbe Pixel (Pᵢ) ermittelt wurde: den Pixelwert (Vⱼ) des genannten Pixels (Pᵢ) einmal aus dem Speicher (18) abzurufen (23) und den abgerufenen Pixelwert (Vⱼ) N-mal an den Pixelstrom (16) anzuhängen (24), wobei N die Anzahl von Teilintervallen (Tₖ) in der genannten Sequenz (Sₘ) ist und zumindest eine Sequenz (Sₘ) ein N > 1 hat, und
den Pixelstrom (16) zum Projektor (7) zum Anzeigen zu zuführen (30).

7. Projektionssystem nach Anspruch 6, wobei die CPU (17) dazu ausgebildet ist, das Scanmuster (5) in Form einer Lookup-Tabelle (32) von Speicheradressen (33) der aufeinanderfolgend anzuzeigenden Pixel (Pᵢ) zu speichern und durch Zugreifen auf die Lookup-Tabelle (32) die Pixel (Pᵢ) zu ermitteln und die Pixelwerte (Vⱼ) abzurufen.

8. Projektionssystem nach Anspruch 7, wobei die Lookup-Tabelle (32) eine Folge (34) von Speicheradressen (33), eine Speicheradresse (33) für jedes Teilintervall (Tₖ), ist, und wobei die CPU (17) dazu ausgebildet ist, die Sequenzen (Sₘ) durch Detektieren aufeinanderfolgender gleicher Speicheradressen (33) in der Folge (34) zu identifizieren (22).

9. Projektionssystem nach Anspruch 7, wobei die Lookup-Tabelle (32) eine Speicheradresse (33) für jede Sequenz (Sₘ) und die jeweilige Anzahl N von Teilintervallen (Tₖ) dieser Sequenz (Sₘ) beinhaltet.

10. Projektionssystem nach einem der Ansprüche 6 bis 9, wobei das genannte Scanmuster ein Lissajous-Muster (5) ist.

11. Projektionssystem nach einem der Ansprüche 6 bis 10, ferner umfassend einen der CPU (17) und dem Projektor (7) zwischengestellten Puffer (15).

12. Projektionssystem nach Anspruch 11, wobei der Puffer (15) dazu ausgebildet ist, den Pixelstrom (16) synchron mit dem Scanner (10) dem Projektor (7) zum Anzeigen zuzuführen.

## Revendications

1. Procédé de génération d'un flux de pixels (16) à partir d'une image (2) comprenant des pixels (Pᵢ) qui ont chacun une valeur de pixel (Vⱼ), où le flux de pixels (16) est destiné à être alimenté dans un projecteur (7) qui balaie un faisceau lumineux (4) sur une zone d'image (3) selon un motif de balayage (5) donné dans un intervalle de temps (TI), le faisceau lumineux (4) étant modulé en intensité selon des valeurs de pixel (Vⱼ) dans le flux de pixels (16), comprenant :
le stockage (20) de l'image (2) dans une mémoire (18) ;
la détermination (21), pour chacun de sous-intervalles (Tₖ) successifs qui forment ensemble l'intervalle de temps (TI), de ce pixel (Pᵢ) qui est destiné à être affiché par le faisceau lumineux (4) dans ledit sous-intervalle (Tₖ) selon le motif de balayage (5) ;
**caractérisé en ce que** le procédé (19) comprend en outre :
l'identification (22) de séquences (Sₘ) successives d'un ou de plusieurs sous-intervalles (Tₖ) successifs pour lesquels le même pixel (Pᵢ) a été déterminé ; et
pour chacune des séquences (Sₘ) successives d'un ou de plusieurs sous-intervalles (Tₖ) successifs pour lesquels le même pixel (Pᵢ) a été déterminé : la récupération (23) de la valeur de pixel (Vⱼ) dudit pixel (Pᵢ) à partir de la mémoire (18) une fois et l'ajout (24) de la valeur de pixel (Vⱼ) récupérée N fois au flux de pixels (16), N étant le nombre de sous-intervalles (Tₖ) dans ladite séquence (Sₘ) et au moins une séquence (Sₘ) ayant un N > 1.

2. Procédé selon la revendication 1, où le motif de balayage (5) est stocké sous la forme d'une table de correspondance (32) d'adresses de mémoire (33) des pixels (Pᵢ) destinés à être affichés successivement, et où ladite détermination (21) et récupération (23) comprend l'accès à la table de correspondance (32).

3. Procédé selon la revendication 2, où la table de correspondance (32) est une succession (34) d'adresses de mémoire (33), une adresse de mémoire (33) pour chaque sous-intervalle (Tₖ), et où les séquences (Sₘ) sont identifiées en détectant des adresses de mémoire (33) successivement égales dans la succession (34).

4. Procédé selon la revendication 2, où la table de correspondance (32) comprend une adresse de mémoire (33) pour chaque séquence (Sₘ) et le nombre respectif N de sous-intervalles (Tₖ) de cette séquence (Sₘ).

5. Procédé selon l'une quelconque des revendications 1 à 4, où ledit motif de balayage est un motif de Lissajous (5).

6. Système de projection pour l'affichage d'une image (2) comprenant des pixels (Pᵢ) qui ont chacun une valeur de pixel (Vⱼ), comprenant :
un projecteur (7) avec une source de lumière (8) conçue pour émettre un faisceau lumineux (4), un pilote de source de lumière (9) conçu pour moduler le faisceau lumineux (4) en intensité selon des valeurs de pixel (Vⱼ) alimentées au projecteur (7) dans un flux de pixels (16), et un balayeur (10) conçu pour balayer le faisceau lumineux (4) sur une zone d'image (3) selon un motif de balayage (5) donné dans un intervalle de temps (TI) ; et
une unité centrale de traitement, CPU, (17) conçue pour
stocker (20) l'image (2) dans une mémoire (18), et
déterminer (21), pour chacun de sous-intervalles (Tₖ) successifs qui forment ensemble l'intervalle de temps (TI), ce pixel (Pᵢ) qui est destiné à être affiché par le faisceau lumineux (4) dans ledit sous-intervalle (Tₖ) selon le motif de balayage (5),
**caractérisé en ce que** la CPU (17) est en outre conçue pour
identifier (22) des séquences (Sₘ) successives d'un ou de plusieurs sous-intervalles (Tₖ) successifs pour lesquels le même pixel (Pᵢ) a été déterminé,
pour chacune des séquences (Sₘ) successives d'un ou de plusieurs sous-intervalles (Tₖ) successifs pour lesquels le même pixel (Pᵢ) a été déterminé : récupérer (23) la valeur de pixel (Vⱼ) dudit pixel (Pᵢ) à partir de la mémoire (18) une fois et ajouter (24) la valeur de pixel (Vⱼ) récupérée N fois au flux de pixels (16), N étant le nombre de sous-intervalles (Tₖ) dans ladite séquence (Sₘ) et au moins une séquence (Sₘ) ayant un N > 1, et
alimenter (30) le flux de pixels (16) vers le projecteur (7) pour l'affichage.

7. Système de projection selon la revendication 6, où la CPU (17) est conçue pour stocker le motif de balayage (5) sous la forme d'une table de correspondance (32) d'adresses de mémoire (33) des pixels (Pᵢ) destinés à être affichés successivement, et pour déterminer les pixels (Pᵢ) et récupérer les valeurs de pixel (Vⱼ) en accédant à la table de correspondance (32).

8. Système de projection selon la revendication 7, où la table de correspondance (32) est une succession (34) d'adresses de mémoire (33), une adresse de mémoire (33) pour chaque sous-intervalle (Tₖ), et où la CPU (17) est conçue pour identifier (22) les séquences (Sₘ) en détectant des adresses de mémoire (33) successivement égales dans la succession (34).

9. Système de projection selon la revendication 7, où la table de correspondance (32) comprend une adresse de mémoire (33) pour chaque séquence (Sₘ) et le nombre respectif N de sous-intervalles (Tₖ) de cette séquence (Sₘ).

10. Système de projection selon l'une quelconque des revendications 6 à 9, où ledit motif de balayage est un motif de Lissajous (5).

11. Système de projection selon l'une quelconque des revendications 6 à 10, comprenant en outre un tampon (15) interposé entre la CPU (17) et le projecteur (7).

12. Système de projection selon la revendication 11, où le tampon (15) est conçu pour alimenter le flux de pixels (16) en synchronisme avec le balayeur (10) au projecteur (7) pour l'affichage.
